# EUROPÄISCHE PATENTSCHRIFT

(11) **EP 1 651 133 B1**
(45) Veröffentlichungstag und Bekanntmachung des Hinweises auf die Patenterteilung: **28.02.2007**
(21) Anmeldenummer: 04762544.7
(22) Anmeldetag: 29.07.2004
(51) Int. Cl.: A61C 8/00

(54) **IMPLANTATTEIL FÜR EIN ZAHNIMPLANTAT**
IMPLANT PART FOR A DENTAL IMPLANT
ELEMENT D'IMPLANT DENTAIRE

(30) Priorität: 05.08.2003 DE 10336537
(43) Veröffentlichungstag der Anmeldung: 03.05.2006
(73) Patentinhaber: Paraplant 2000 OHG, 22397 Hamburg (DE)
(72) Erfinder: LAUX, Thomas, 86356 Steppach/Neusäss (DE)
(74) Vertreter: Gallo, Wolfgang
(86) Internationale Anmeldenummer: PCT/DE2004/001699
(87) Internationale Veröffentlichungsnummer: WO 2005/013845

(56) Entgegenhaltungen:
- DE-C- 10 149 166
- US-A- 5 033 962
- US-A- 5 082 445
- US-A- 5 890 902

## Beschreibung

Die Erfindung betrifft ein Implantatteil für ein Zahnimplantat gemäß dem Oberbegriff des Anspruches 1.

Ein gattungsgemäßes Implantatteil für ein Zahnimplantat zeigt die DE 101 49 166 C1. Das dort gezeigte Zahnimplantatteil umfasst einen in den Kiefer eingebrachten Basisträger, einen hohlzylindrischen Aufbaupfosten und eine zweiteilige Sekundärkrone. Der Aufbaupfosten wird mittels einer zentralen Verbindungsschraube, die durch die hohlzylindrische Bohrung des Aufbaupfostens reicht, an dem Basisträger befestigt. Auf dem Aufbaupfosten sitzt die zweiteilige Sekundärkrone. Um in Richtung der Längsachse des Zahnimplantats eine translatorische Bewegung zu ermöglichen, ist die Sekundärkrone zweiteilig aufgebaut und weist zwei separate, jedoch miteinander verbundene Abschnitte, nämlich ein Trägerteil sowie ein Verbindungsteil auf, zwischen denen zwei Federelemente zur Stoßdämpfung angeordnet sind. Aufgabe dieses Implantatteils ist es, eine sichere und dauerhafte Verbindung ohne Beeinträchtigung der dämpfenden Federwirkung zu gewährleisten. Nachteilig bei diesem Implantatteil ist jedoch, dass der Zusammenbau der zweiteiligen Sekundärkrone und der darin befindlichen Federelemente kompliziert und zeitaufwendig ist. Ebenso vermindert die Zentralbohrung im Aufbaupfosten dessen Festigkeit, wodurch das Befestigen des Aufbaupfostens am Basisträger schwieriger wird.

Aufgabe der vorliegenden Erfindung ist es, ein Implantatteil für ein Zahnimplantat bereitzustellen, dass einfach und kostensparend herzustellen ist, ein einfaches Einsetzen des Implantatteils ermöglicht und eine dauerhafte und sichere Verbindung der Implantatteile des Zahnimplantats gewährleistet, ohne die dämpfende Federwirkung zu beeinträchtigen.

Gelöst wird diese Aufgaben durch ein Implantatteil für ein Zahnimplantat mit den Merkmalen des Anspruches 1. Vorteilhafte Ausgestaltungen des Implantatteils sind den Unteransprüchen entnehmbar. Ausführungsbeispiele der Erfindung werden im folgenden unter Bezugnahme auf die begleitenden Zeichnungen näher erläutert. Diese zeigen im einzelnen:
- **Fig. 1:**: einen Schnitt durch die Längsachse eines ersten Ausführungsbeispiels eines zusammengesetzten Implantatteils mit Bajonettverschluß,
- **Fig. 1a:**: eine Draufsicht auf den Aufbaupfosten eines Implantatteils gemäß Figur 1
- **Fig. 2:**: einen Schnitt durch die Längsachse eines zweiten Ausführungsbeispiels eines zusammengesetzten Implantatteils mit Gewindeverbindung,
- **Fig. 2a:**: eine Draufsicht auf den Aufbaupfosten eines Implantatteils gemäß Figur 2
- **Fig. 3:**: einen Schnitt durch die Längsachse eines dritten Ausführungsbeispiels eines zusammengesetzten Implantatteils mit Schnappverschluß mit am Aufbaupfosten angebrachten Außenrastelementen,
- **Fig. 3a:**: eine Draufsicht auf den Aufbaupfosten eines Implantatteils gemäß Figur 3
- **Fig. 4:**: einen Schnitt durch die Längsachse eines vierten Ausführungsbeispiels eines zusammengesetzten Implantatteils mit Schnappverschluß mit an der Krone angebrachten Außenrastelementen,
- **Fig. 4a:**: eine Draufsicht auf den Aufbaupfosten eines Implantatteils gemäß Figur 4,
- **Fig. 5:**: einen Schnitt durch die Längsachse eines fünften Ausführungsbeispiels eines zusammengesetzten Implantatteils mit seitlichem Sicherungselement mit Schnappsicherung,
- **Fig. 5a:**: eine Draufsicht auf den Aufbaupfosten eines Implantatteils gemäß Figur 5,

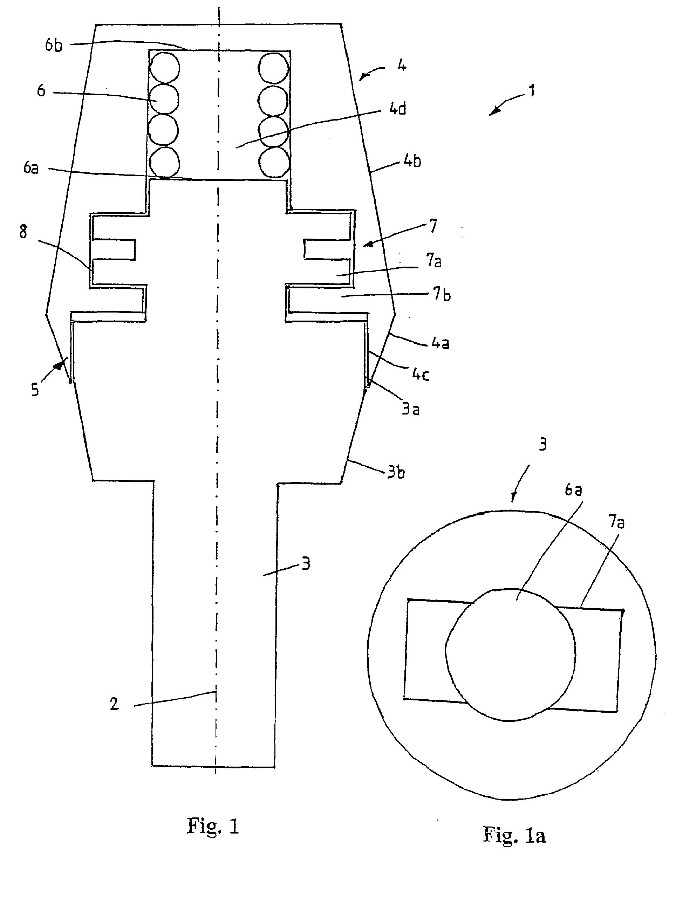

**Figur 1** zeigt einen Schnitt durch eine Längsachse 2 eines zusammengesetzten Implantatteils 1 mit Bajonettverschluß und **Figur 1a** eine Draufsicht auf den zugehörigen Aufbaupfosten. Die im weiteren gebrauchten Begriffe "oben" und "unten" beziehen sich auf die Längsachse 2 des Implantatteils 1 gemäß den Figuren 1, 2, 3, 4 und 5, eingesetzt in einen Unterkieferknochen.

Der Aufbaupfosten 3 weist im oberen Bereich ein Verbindungselement 7a auf, während er im darunterliegenden unteren Bereich einen zylinderförmiger Bereich 3a umfasst, der sich dann nach unten hin in einen kegelstumpfförmiger Bereich 3b verjüngt. Die rotationssymetrische Achse des Aufbaupfostens 3 verläuft koaxial zur Längsachse 2 Implantatteils 1 und des Zahnimplantats im in den Kiefer eingesetzten Zustand.

Auf den Aufbaupfosten 3 wird eine Krone 4 aufgesetzt, die zur Aufnahme einer hier nicht gezeigten Verblendung oder Prothese dient. Die Krone 4 ist außen doppelkegelstumpfförmig ausgebildet, wobei der untere, sich nach unten verjüngende Kegelstumpf 4a in Richtung der Längsachse 2 wesentlich kürzer ist als der obere, sich nach oben verjüngende Kegelstumpf 4b. In ihrem Inneren weist die Krone 4 eine zentrale Ausnehmung 4d auf, die hier durch eine Bohrung koaxial zur Längsachse 2 gebildet wird.

Zum Verbinden der Krone 4 mit dem Aufbaupfosten 3 dient eine Formschlussverbindung 7, die hier als an sich bekannter Bajonettverschluss ausgebildet ist. Hierzu ist der Aufbaupfosten 3 an seinem oberen Ende zylinderförmig, wobei sein Durchmesser etwas kleiner ist als der Durchmesser der zentrale Ausnehmung 4d der Krone 4, so dass diese gegenüber dem Aufbaupfosten 3 in Richtung der Längsachse 2 bewegbar ist. An dem zylinderförmigen oberen Ende des Aufbaupfostens befindet sich ein erstes Verbindungselement 7a des Aufbaupfostens 3, das durch zwei sich gegenüberstehende, seitlich rechteckförmige Vorsprünge gebildet wird, die eine radiale seitliche Ausnehmung aufweisen. Eine Draufsicht auf den Aufbaupfosten in Figur 1a zeigt die rechteckförmigen Vorsprünge von oben, wobei sie hier eine gerade äußere Kante aufweisen, welche aber auch kreisabschnittförmig sein kann.

Das erste Verbindungselement 7a des Aufbaupfostens 3 kann mit einem zweiten Verbindungselement 7b der Krone in Eingriff gebracht werden, das durch eine innere, ringförmige Ausnehmung im unteren Bereich der Krone gebildet wird. Zum Zusammenbau von Aufbaupfosten 3 und Krone 4 weist der ringförmige Vorsprung der Krone 4, der die ringförmige Ausnehmung nach unten begrenzt, zwei zu den rechteckförmigen Vorsprüngen des Aufbaupfostens 3 korrespondierende Öffnungen auf, durch welche die rechteckförmigen Vorsprünge des ersten Verbindungselements 7a des Aufbaupfostens greifen. Die Höhe der ringförmigen Ausnehmung in Richtung der Längsachse 2 ist an den Öffnungen so hoch, dass die rechteckförmigen Vorsprünge des ersten Verbindungselements 7a eingedreht werden können. Die Höhe vermindert sich dann in radialer Richtung rampenförmig bis zu einer als Verdrehsicherung dienenden Rastausnehmung, die vor der in der Drehrichtung gelegenen nächsten Öffnung liegt und eine solche Höhe in Richtung der Längsachse 2 aufweist, dass in zusammengebautem Zustand ein begrenztes Bewegungsspiel der Krone 4 gegenüber dem Aufbaupfosten in Richtung der Längsachse 2 möglich ist. Dieses Bewegungsspiel ist abhängig von der Höhendifferenz des zweiten Verbindungselements 7b der Krone und des ersten Verbindungselements 7a des Aufbaupfostens und beträgt vorzugsweise 10 bis 100 Mikrometer.

In den zylinderförmigen Freiraum zwischen Aufbaupfosten 3 und Krone 4, der in zusammengebauten Zustand besteht, ist ein vorgespanntes Federelement 6 eingesetzt, das durch eine Schraubenfeder gebildet wird. Das Federelement 6 greift an einer ersten Anlagefläche 6a am oberen Ende des Aufbaupfostens und einer zweiten Anlagefläche 6b am oberen Ende der zentralen Ausnehmung 4d der Krone an, so dass im unbelasteten Zustand die Krone 4 in Richtung der Längsachse 2 vom Aufbaupfosten 3 weggedrückt wird. Zur Einstellung der Federkraft des Federelements 6 können zwischen Federelement 6 und den Anlageflächen 6a und 6b Distanzelemente angeordnet werden.

An ihrem unteren Ende weist die Krone 4 eine Übergangsbohrung 4c auf, die in zusammengebauten Zustand des Zahnimplantats den zylinderförmigen Bereich 3a des Aufbaupfostens 3 übergreift. In unbelastetem Zustand des Federelements 6, wenn also keine äußeren Kräfte in Richtung der Längsachse 2 auf das Zahnimplantat wirken, gehen der untere Kegelstumpf 4a der Krone 4 und der kegelstumpfförmige Bereich 3b des Aufbaupfostens 3 bündig ineinander über, so dass der Übergangsbereich 5 abgedichtet ist, um ein Eindringen von Speiseresten oder von zum Befestigen der Prothesen oder Verblendungen verwendetem Zement in die inneren Freiräume des Implantatteils 1 und ein daraus resultierendes Blockieren der Beweglichkeit der Krone 4 gegenüber dem Aufbaupfosten 3 zu verhindern.

Das Einschrauben des zusammengebauten Implantatteils 1 in den im Kieferknochen verwachsenen Basisträger (nicht gezeigt) kann mittels eines Innenkonusschlüssels erfolgen, der von oben auf die Krone 4 aufgedrückt wird und aufgrund der entstehenden Kraftschlussverbindung das Eindrehen ermöglicht. Weiter kann die Krone 4 zum Einschrauben in den Basisträger an ihrer Außenseite hier nicht dargestellte Kerben oder Abflachungen aufweisen, in die ein geeignetes Werkzeug formschlüssig eingreift, beispielsweise ein Innenzweikant- oder Innensechskantschlüssel.

Besonderer Vorteil dieses Implantatteils 1 mit Bajonettverschluss ist neben dem einfachen Einbau, dass die Krone 4 zu Kontroll- oder Reparaturzwecken zerstörungsfrei wieder von dem Aufbaupfosten 3 abgenommen werden kann.

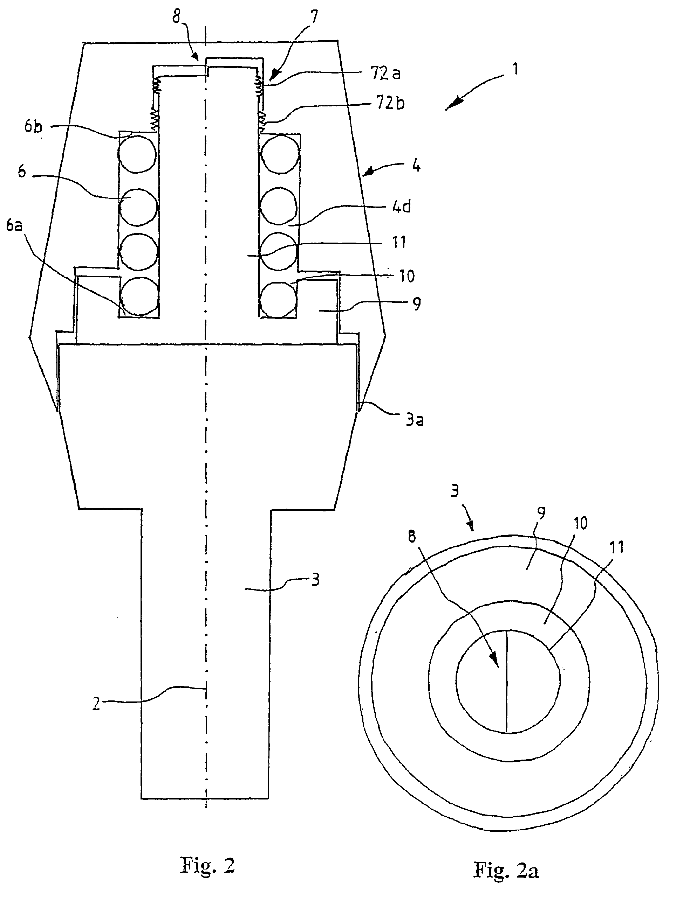

Figur 2 zeigt einen Schnitt durch die Längsachse 2 eines zusammengesetzten Implantatteils 1 mit Gewindeverbindung und Figur 2a eine Draufsicht auf den zugehörigen Aufbaupfosten. Dieses Implantatteil 1 ist weitgehend identisch zu dem in Figur 1 gezeigten Ausführungsbeispiel, beschrieben werden im folgenden die unterschiedlich ausgeformten Elemente.

Hierbei umfasst der Bereich des Aufbaupfostens 3 oberhalb seines zylinderförmigen Bereichs 3a einen Außenzylinder 9 mit einer Ringnut 10 und einen Innenzylinder 11, an dessen oberen Ende das erste Verbindungselement 7a des Aufbaupfostens angeordnet ist.

Der Außenzylinder 9 verläuft koaxial zur Längsachse 2 hat einen geringfügig kleineren Durchmesser als der zylinderförmige Bereich 3a des Aufbaupfostens 3, um bewegbar in eine korrespondierende Innenbohrung im unteren Abschnitt der Krone 4 greifen zu können. Sowohl der Außenzylinder 9 als auch die korrespondierende Innenbohrung der Krone 4 weisen eine geringere Höhe als die zentrale Ausnehmung 4d der Krone auf, wobei der Außenzylinder um den Betrag des gewünschten Bewegungsspiels zwischen Aufbaupfosten 3 und Krone 4 kürzer ist als die Innenbohrung der Krone 4.

Der Innenzylinder 11 verläuft koaxial zur Längsachse 2 und reicht durch die zentrale Ausnehmung 4d der Krone 4. Der Durchmesser des Innenzylinders 11 ist so bemessen, dass zwischen seinen Außenflächen und den Innenflächen der zentralen Ausnehmung 4d ein dem Ausführungsbeispiel nach Figur 1 entsprechendes Federelement 6 eingesetzt werden kann.

Zur sicheren Anlage des einen Endes des Federelements 6 am Aufbaupfosten 3 befindet sich die erste Anlagefläche 6a in einer Ringnut 10, die kreisringförmig um den Innenzylinder 11 von oben in den Außenzylinder 9 eingelassen ist. Als zweite Anlagefläche 6b der Krone 4 für das Federelement 6 dient das obere Ende der zentralen Ausnehmung 4d der Krone 4.

Um Aufbaupfosten 3 und Krone 4 formschlüssig zu verbinden, befindet sich am oberen Ende der zentralen Ausnehmung 4d der Krone 4 eine zusätzliche, nach oben reichende, koaxial zur Längsachse 2 ausgerichtete zylinderförmige Verbindungsausnehmung, deren Durchmesser geringfügig größer ist als der des Innenzylinders 11. Der untere Bereich der Verbindungsausnehmung weist ein Innengewinde 72b auf, welches das Verbindungselement 7b der Krone 4 bildet. Das Innengewinde 72b passt in ein entsprechendes Außengewinde 72a am oberen Ende des Innenzylinders 11, welches das erste Verbindungselement 7a des Aufbaupfostens darstellt. Die Verbindung von Krone 4 und Aufbaupfosten 3 erfolgt durch Einschrauben des Innenzylinders 11 mit dem Außengewinde 72a in das Innengewinde 72b der Krone 4, bis die beiden Gewinde außer Eingriff gelangen. Um dies und zusätzlich die gewünschte Bewegung von Krone 4 gegenüber dem Aufbaupfosten 3 in Richtung der Längsachse 2 zu ermöglichen, ist der Bereich der Verbindungsausnehmung oberhalb des Innengewindes 72b so hoch wie das Außengewinde 72a zuzüglich des gewünschten Bewegungsspiels.

Weiter weist die Verbindungsausnehmung eine nach oben ragende, halbkreisförmige Ausnehmung auf, in die ein korrespondierender halbkreisförmiger Teil des oberen Endes des Innenzylinders 11 reicht, welche im Zusammenspiel eine Verdrehsicherung 8 bilden. Diese weisen eine entsprechende Höhe auf, um die gewünschte Bewegung von Krone 4 gegenüber dem Aufbaupfosten 3 in Richtung der Längsachse 2 einschließlich des Bewegungsspiels zu erlauben. Durch Niederdrücken der eingeschraubten Krone 4 auf den Aufbaupfosten 3 gelangt die halbkreisförmige Ausnehmung in formschlüssigen Eingriff mit dem halbkreisförmigen Innenzylinderteil, so dass das Implantatteil 1 in den im Kieferknochen verwachsenen Basisträger eingeschraubt werden kann.

Besonderer Vorteil dieses Implantatteils 1 mit Gewindeverbindung ist neben dem einfachen Einbau, dass die Krone 4 zu Kontroll- oder Reparaturzwecken zerstörungsfrei wieder von dem Aufbaupfosten 3 abgenommen werden kann. Zusätzlich sorgt der Innenzylinder 11 für eine erhöhte Stabilität des Aufbaupfostens 3 und eine saubere Führung des Federelements 6, für das auch mehr Raum in Richtung der Längsachse 2 zu Verfügung steht.

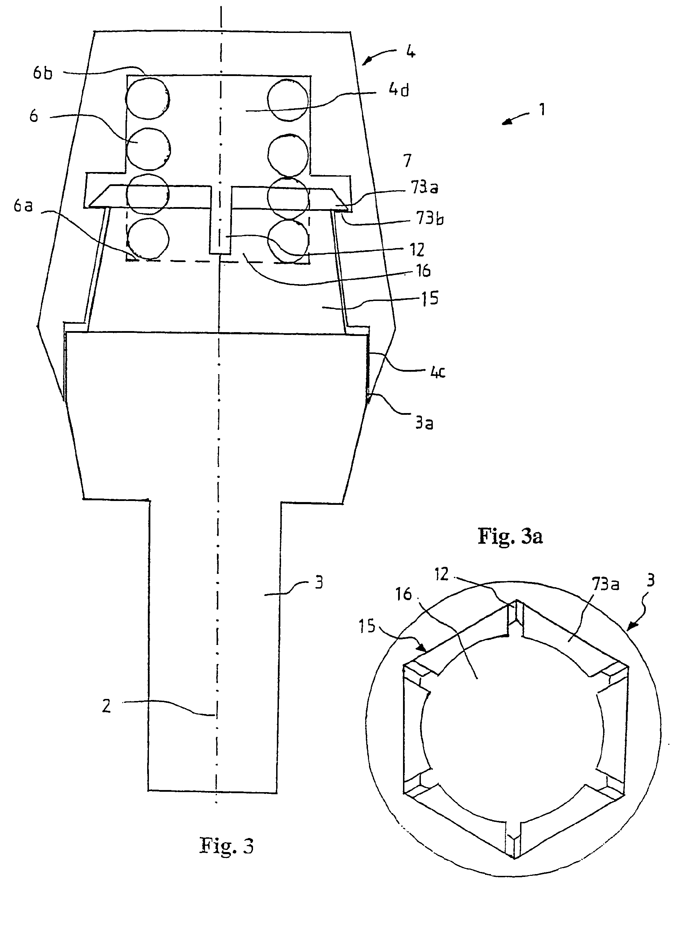

Figur 3 zeigt einen Schnitt durch die Längsachse 2 eines zusammengesetzten Zahnimplantats mit einem Implantatteil 1 mit Schnappverschluß mit am Aufbaupfosten angebrachten Außenrastelementen und Figur 3a eine Draufsicht auf den zugehörigen Aufbaupfosten. Dieses Implantatteil 1 unterscheidet sich von den in Figuren 1 und 2 gezeigten Ausführungsbeispielen durch die Art der Verbindung, welche im folgenden beschrieben wird.

Der Aufbaupfosten 3 weist in seinem oberen Bereich einen, hier sechseckförmigen Pfosten 15 auf, der sich, ausgehend von der zylinderförmigen Bereich 3a des Aufbaupfostens 3 nach oben hin verjüngt, Der Pfosten 15 kann auch eine andere Form haben, z.B. dreieckig oder mehreckig. Am oberen Ende des sechseckförmigen Pfostens 15 befinden sich Außenrastelemente 73a, welche über die Außenflächen des Pfostens 15 ragen und eine untere, waagrechte Rastkante und ein obere, nach innen und oben abgeschrägte Schnappfläche aufweisen. In das obere Ende des sechseckförmigen Pfostens 15 ist eine Bohrung 16 eingebracht, welche etwa bis zur Hälfte der Höhe des sechseckförmigen Pfostens 15 reicht. Die oberen Enden der sechs Kanten des sechseckförmigen Pfostens 15 sind mit Aussparungen 12 versehen, welche im wesentlichen so hoch sind wie die Bohrung 16. Durch die Bohrung 16 und die Aussparungen 12 entstehen am oberen Ende des sechseckförmigen Pfostens 6 elastische Schnappelemente.

Die zentrale Ausnehmung 4d der Krone 4 weist oberhalb der Übergangsbohrung 4c drei Bereiche auf. Einen unteren Bereich mit sich nach oben verjüngender Sechseckform, welche zur Form des sechseckförmigen Pfosten 15 korrespondiert. Weiter einen mittleren Bereich mit Innenrastelementen 73b, die eine untere waagrechte Rastkante haben, in die die Außenrastelemente 73a des Aufbaupfostens 3 einschnappen, um eine sichere Verbindung zwischen Aufbaupfosten 3 und Krone 4 zu ermöglichen. Der dritte, obere Bereich der zentralen Ausnehmung 4d der Krone 4 ist ein zylindrische Bohrung zur Aufnahme des Federelements 6, das in den Raum zwischen der zentrale Ausnehmung 4d der Krone und der Bohrung 16 im Aufbaupfosten 3 eingesetzt ist

Um beim zusammengebauten Implantatteil 1 die Bewegung der Krone 4 gegenüber dem Aufbaupfosten 3 in Richtung der Längsachse 2 zu ermöglichen, sind die Höhen der Übergangsbohrung 4c und des unteren und mittleren Bereichs der zentralen Ausnehmung 4d der Krone 4 gegenüber der Höhe des sechseckförmigen Pfostens 15 so bemessen, daß das gewünschte Bewegungsspiel möglich ist. Auch die schrägen Flächen des unteren Bereichs der zentralen Ausnehmung 4d und des Aufbaupfostens 3 weisen den für die ungehinderte Bewegung notwendigen Abstand auf.

Besonders vorteilhaft bei diesem Ausführungsbeispiel ist der schnelle und einfache Zusammenbau des Implantatteils. Auch verhindert der sechseckförmige Pfosten 15 eine seitliche Bewegung der Krone 4 auf dem Aufbaupfosten 3 und dient zugleich als Verdrehsicherung 8.

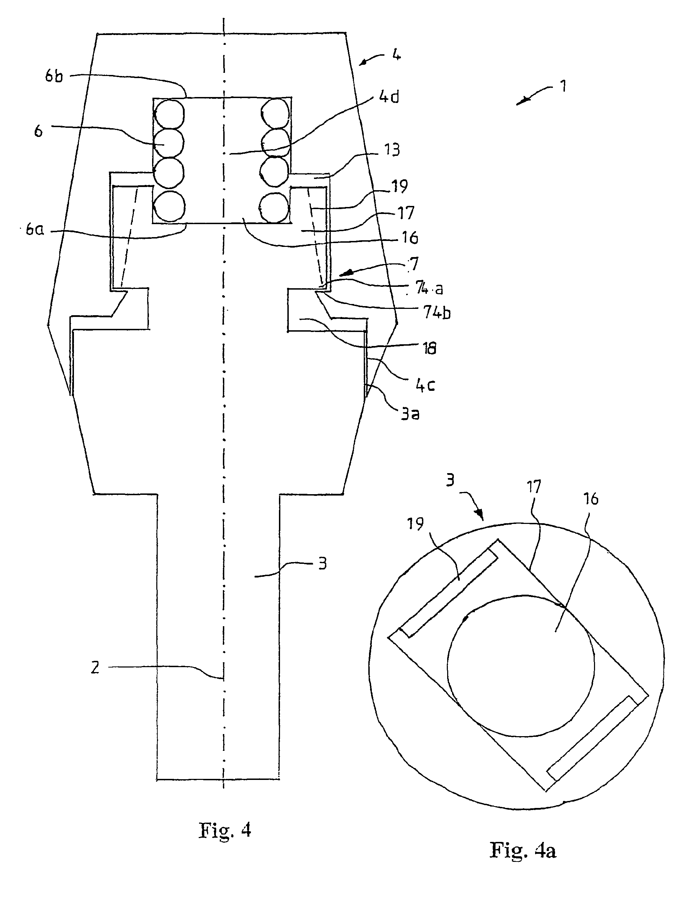

Figur 4 zeigt einen Schnitt durch die Längsachse 2 eines zusammengesetzten Implantatteils 1 mit Schnappverschluß mit an der Krone angebrachten Außenrastelementen und Figur 4a eine Draufsicht auf den zugehörigen Aufbaupfosten. Dieses Implantatteil 1 unterscheidet sich von den in Figuren 1 bis 3 gezeigten Ausführungsbeispielen durch die Art der Verbindung, welche im folgenden beschrieben wird.

Der Aufbaupfosten 3 weist in seinem oberen Bereich einen rechteckförmigen Pfosten 17 auf, der am unteren Ende seiner kürzeren Seite benachbart des zylinderförmigen Bereichs 3a des Aufbaupfostens 3 zwei gegenüberliegende Aussparungen 18 hat, deren obere Flächen die waagrechte Rastkante 74a für die Schnappverbindung bilden. Die Seitenflächen 19 an den kürzeren, weiter außen liegenden Seiten des rechteckförmigen Pfostens 17 sind teilweise nach oben und innen abgeschrägt, um das Einschnappen der Schnappverbindung zu erleichtern. In das obere Ende des rechteckförmigen Pfostens 17 ist eine Bohrung 16 eingebracht, welche zur Aufnahme und als erste Anlagefläche 6a des Aufbaupfostens für das Federelement 6 dient.

Die zentrale Ausnehmung 4d der Krone 4 weist oberhalb der Übergangsbohrung 4c zwei Bereiche auf. Der untere Bereich ist eine rechteckförmige Ausnehmung 13, welche zur Form des rechteckförmigen Pfostens 17 korrespondiert. Am unteren Ende ihrer kürzeren Seiten weist die Ausnehmung 13 zwei sich gegenüberliegende Außenrastelemente 74b mit einer oberen, waagrechte Rastkante und einer unteren, nach innen und unten abgeschrägten Schnappfläche auf. Der zweite, obere Bereich der zentralen Ausnehmung 4d der Krone 4 ist ein zylindrische Bohrung zur Aufnahme des Federelements 6, das in den Raum zwischen der zentrale Ausnehmung 4d der Krone und der Bohrung 16 im Aufbaupfosten 3 eingesetzt ist.

Um beim zusammengebauten Implantatteil 1 die Bewegung der Krone 4 gegenüber dem Aufbaupfosten 3 in Richtung der Längsachse 2 zu ermöglichen, sind die Höhen der Übergangsbohrung 4c und der rechteckförmigen Ausnehmung 13 der zentralen Ausnehmung 4d der Krone 4 gegenüber der Höhe des rechteckförmigen Pfostens 17 so bemessen, dass das gewünschte Bewegungsspiel möglich ist.

Besonders vorteilhaft bei diesem Ausführungsbeispiel ist der schnelle und einfache Zusammenbau des Implantatteils. Auch verhindert der rechteckförmige Pfosten 17 eine seitliche Bewegung der Krone 4 auf dem Aufbaupfosten 3 und dient zugleich als Verdrehsicherung 8.

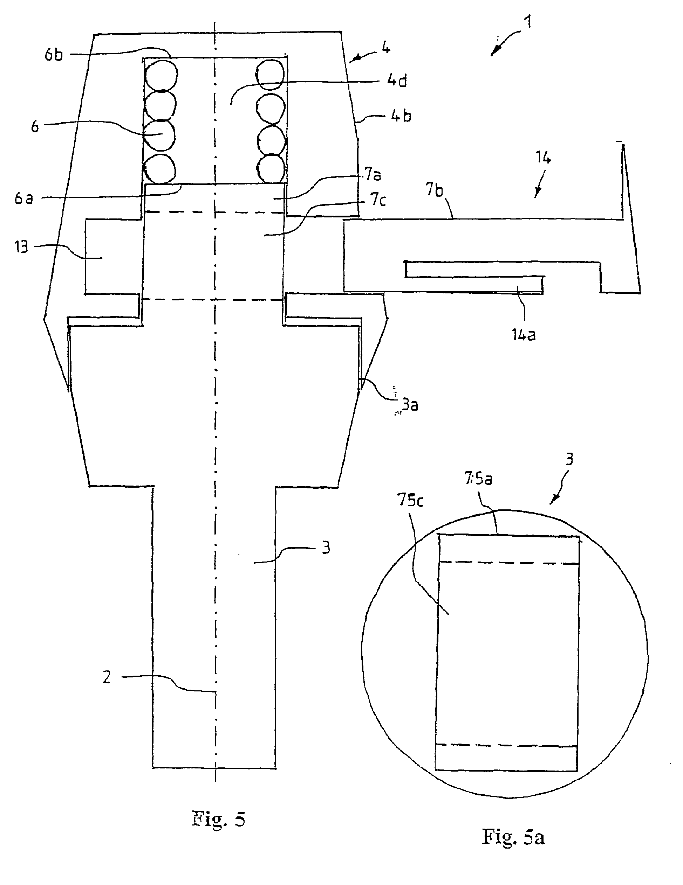

Figur 5 zeigt einen Schnitt durch die Längsachse 2 eines zusammengesetzten Implantatteils 1 mit seitlichem Sicherungselement mit Schnappsicherung und Figur 5a eine Draufsicht auf den zugehörigen Aufbaupfosten.

Die Formschlussverbindung 7 zwischen Aufbaupfosten 3 und Krone 4 wird durch ein seitlich einsteckbares Sicherungselement 14 verwirklicht. Das Verbindungselement 7a des Aufbaupfostens 3 wird durch einen rechteckförmigen Quader 75a gebildet, dessen Längsseite auf dem zylinderförmigen Bereich 3a des Aufbaupfostens 3 quer zur Längsachse 2 angeordnet ist. Diese Längseite weist eine durch den ganzen Quader 75a reichende, rechteckförmige Ausnehmung 75c auf.

Die Krone 4 weist am oberen Kegelstumpf 4b an einer Stelle der Außenseite eine Abflachung auf, in die eine rechteckförmige Ausnehmung 13 eingebracht ist, die in das Innere der Krone 4 bis über die zentrale Ausnehmung 4d der Krone 4 reicht. Diese rechteckförmige Ausnehmung 13 fluchtet beim zusammengebautem Implantatteil 1 mit der Ausnehmung 75c im Quader 75a des Aufbaupfostens 3.

Krone 4 und Aufbaupfosten 3 werden verbunden durch das Sicherungselement 14, das im wesentlichen längsquaderförmig ausgebildet ist und eine solche Länge aufweist, dass es in zusammengebauten Zustand des Implantatteils 1 durch die rechteckförmige Ausnehmung 13 der Krone 4 und die rechteckförmige Ausnehmung 75c im Quader 75a bis ans innere Ende der rechteckförmigen Ausnehmung 13 reicht. Höhe und Breite des Sicherungselements 14 sind so bemessen, das es bündig in die rechteckförmige Ausnehmung 13 der Krone 4 reicht und ein seitliches Verrutschen der Krone 4 auf dem Aufbaupfosten 3 verhindert. An der in zusammengebautem Zustand des Implantatteils 1 nach außen weisenden Seite des Sicherungselements 14 weist dieses eine Form auf, die den durch die Abflachung an der Außenseite des oberen Kegelstumpfs 4b fehlenden Teil der Krone 4 wieder zur bündigen kegelstumpfartigen Oberfläche der Krone 4 ergänzt.

Um ein ungewolltes Lösen der Krone 4 vom Aufbaupfosten 3 zu verhindern, hat das Sicherungselement 14 an seiner Unterseite eine federnde Zunge 14a, die an ihrem eine Ende mit dem Sicherungselement 14 fest verbunden ist und deren freies Ende in Richtung der Abflachung an der Außenseite der Krone 4 weist. Die Zunge 14a ragt in entspanntem Zustand mit ihrem freien Ende so weit über die Unterseite des Sicherungselement 14 heraus, dass ihr freies Ende beim zusammengebauten Implantatteil 1 mit der Oberfläche der zentralen Ausnehmung 4d der Krone 4 unterhalb der rechteckförmigen Ausnehmung 13 in Eingriff gelangt. Um das Einschieben des Sicherungselements 14 in die Ausnehmung 13 der Krone 4 und durch die rechteckförmige Ausnehmung 75c des Quaders 75a Aufbaupfostens 3 zu ermöglichen, kann die Zunge 14a in eine Aussparung an der Unterseite des Sicherungselements 14 zurückweichen.

Damit die Krone 4 in Richtung der Längsachse 2 des Implantatteils 1 beweglich gegenüber dem Aufbaupfosten 3 ist, ist die rechteckförmige Ausnehmung 75c des Quaders in Richtung der Längsachse 2 um den gewünschten Betrag des Bewegungsspiels zwischen Krone 4 und Aufbaupfosten 3 höher als die Höhe des quaderförmigen Teils des Sicherungselements 14.

Die erste Anlagefläche 6a des Federlements 6 am Aufbaupfosten 3 wird durch die Oberseite des Quaders 75a gebildet, die zweite Anlagefläche 6b der Krone 4 ist das obere Ende der zentralen Ausnehmung 4d der Krone 4. Im unbelasteten Zustand des Zahnimplantats wird die Oberseite des Sicherungselements 14 an die Oberseite der Ausnehmung 75c des Quaders 75a gedrückt.

Besonderer Vorteil der Erfindung ist, dass sie keine zentrale innere Schraube zur Verbindung des Aufbaupfostens mit dem Basisträger benötigt und somit das Federelement direkt zwischen Aufbaupfosten und Krone angeordnet werden kann. Somit entfällt die Aufteilung der Krone in zwei Teile, wodurch der Zusammenbau des Implantatteils aus Aufbaupfosten, Krone und Federelement vereinfacht wird und der Aufbaupfosten massiver und robuster ausgebildet werden kann. Aufgrund dieser erhöhten Stabilität und durch die im Inneren des Implantatteils angeordnete Verdrehsicherung zwischen Aufbaupfosten und Krone ist es möglich, das zusammengesetzte Implantatteil 1 mit einem außen an der Krone angreifendem Werkzeug, beispielsweise einem Zweikant-, einem Sechskant- oder einem Innenkonusschlüssel in besonders einfacher Weise in den im Kieferknochen verwachsenen Basisträger einzuschrauben.

Durch das bündige Übereinandergehen der Krone in den Aufbaupfosten und die Anordnung des Übergangsbereichs im unteren Bereich der Krone wird zudem das Eindringen von Zement verhindert, mit dem eine Prothese oder Verblendung auf der Krone befestigt wird. Somit wird die Längsbeweglichkeit der Krone auf dem Aufbaupfosten gesichert, die Gefahr der Blockierung ist minimiert.

### Bezugszeichenliste

- 1: Implantatteil
- 2: Längsachse des Implantatteils
- 3: Aufbaupfosten
- 3a: zylinderförmiger Bereich des Aufbaupfostens
- 3b: kegelstumpfförmiger Bereich des Aufbaupfostens
- 4: Krone
- 4a: unterer Kegelstumpf der Krone
- 4b: oberer Kegelstumpf der Krone
- 4c: Übergangsbohrung
- 4d: Zentrale Ausnehmung der Krone
- 5: Übergangsbereich zwischen Aufbaupfosten und Krone
- 6: Federelement, insbesondere Drehfeder
- 6a: erste Anlagefläche des Federelements am Aufbaupfostens
- 6b: zweite Anlagefläche des Federelements an den Krone
- 7: Formschlussverbindung
- 7a: erstes Verbindungselement (Aufbaupfosten)
- 7b: zweites Verbindungselement (Krone)
- 72a: Außengewinde am Aufbaupfosten
- 72b: Innengewinde an der Krone
- 73a: Außenrastelemente am Aufbaupfosten
- 73b: Innenrastelemente an der Krone
- 74a: waagrechte Rastkante am Aufbaupfosten
- 74b: Außenrastelemente an der Krone
- 75a: rechteckförmiger Quader am Aufbaupfosten
- 75b: längsquaderförmiges Verbindungselement
- 75c: rechteckförmige Ausnehmung im rechteckförmigen Quader
- 8: Verdrehsicherung
- 9: Außenzylinder
- 10: Ringnut
- 11: Innenzylinder
- 12: Aussparungen
- 13: rechteckförmige Ausnehmung der Krone
- 14: Sicherungselement
- 14a: Zunge am Sicherungselement
- 15: sechseckförmiger Pfosten
- 16: Bohrung im Aufbaupfosten
- 17: rechteckförmiger Pfosten
- 18: Aussparungen im rechteckförmigen Pfosten
- 19: Schräge Seitenflächen des rechteckförmigen Pfostens

## Patentansprüche

1. Implantatteil (1) für ein Zahnimplantat, mit einem Aufbaupfosten (3) und einer gegen die Wirkung eines Federelements (6) in axialer Längsrichtung (2) des Implantatteils (1) innerhalb bestimmter Grenzen beweglichen Krone (4), **dadurch gekennzeichnet, dass** die Krone (4) einteilig ausgebildet ist und mittels einer Formschlussverbindung (7) verriegelbar am Aufbaupfosten (3) angeordnet ist und dass das Federelement (6) zwischen dem Aufbaupfosten (3) und der Krone (4) wirkt.

2. Implantatteil nach Anspruch 1, **dadurch gekennzeichnet, dass** es eine im wesentlichen doppelkegelstumpfförmige Form aufweist, wobei seine axiale Längsachse (2) im wesentlichen koaxial zur Längsachse des Zahnimplantats verläuft.

3. Implantatteil nach Anspruch 1 oder 2, **dadurch gekennzeichnet, dass** die die Außenkontur des Implantatteils (1) bildenden Oberflächen von Aufbaupfosten (3) und Krone (4) bündig ineinander übergehen.

4. Implantatteil nach einem der vorangehenden Ansprüche, **dadurch gekennzeichnet, dass** der Aufbaupfosten (3) an seinem unteren Ende mit einem in den Kieferknochen einzusetzenden Basisträger verbindbar ist und dass an seinem oberen Ende die Verbindungselemente (7a), die mit den Verbindungselementen (7b) der Krone (4) zusammenwirken, angeordnet sind.

5. Implantatteil nach einem der voranstehenden Ansprüche, **dadurch gekennzeichnet, dass** das Federelement (6) zwischen einer ersten Anlagefläche (6a) des Aufbaupfostens (3) und einer zweiten Anlagefläche (6b) der Krone (4) eingespannt ist.

6. Implantatteil nach einem der voranstehenden Ansprüche, **dadurch gekennzeichnet, dass** zwischen dem Federelement (6) und der ersten Anlagefläche (6a) des Aufbaupfosten (3) und/oder zwischen dem Federelement (6) und der zweiten Anlagefläche (6b) der Krone (4) Distanzelemente angeordnet sind.

7. Implantatteil nach einem der voranstehenden Ansprüche, **dadurch gekennzeichnet, dass** das Federelement (6) zwischen Aufbaupfosten (3) und Krone (4) in einer zentralen und koaxial zur Längsachse (2) des Implantatteils (1) verlaufenden inneren Ausnehmung (4d) der Krone (4) angeordnet ist.

8. Implantatteil nach einem der voranstehenden Ansprüche, **dadurch gekennzeichnet, dass** die Formschlussverbindung (7) lösbar ist, um die Krone (4) unbeschädigt vom Aufbaupfosten (3) abnehmen zu können.

9. Implantatteil nach einem der voranstehenden Ansprüche, **dadurch gekennzeichnet, dass** das Federelement (6) den oberen Bereich des Aufbaupfostens (3) umgreift.

10. Implantatteil nach einem der voranstehenden Ansprüche, **dadurch gekennzeichnet, dass** es eine zwischen Aufbaupfosten (3) und Krone (4) wirkende Verdrehsicherung (8) aufweist, die ein Verdrehen der auf dem Aufbaupfosten (3) aufgesetzten Krone (4) verhindert.

11. Implantatteil nach einem der voranstehenden Ansprüche, **dadurch gekennzeichnet, dass** die Formschlussverbindung (7) zwischen Aufbaupfosten (3) und Krone (4) ein Außengewinde (72a) an dem Aufbaupfosten (3) und ein hierzu korrespondierendes Innengewinde (72b) an der Krone (4) umfasst.

12. Implantatteil nach Anspruch 8, **dadurch gekennzeichnet, dass** die Formschlussverbindung (7) zwischen Aufbaupfosten (3) und Krone (4) als Bajonettverschluß ausgebildet ist.

13. Implantatteil nach Anspruch 8, **dadurch gekennzeichnet, dass** die Formschlussverbindung (7) zwischen Aufbaupfosten (3) und Krone (4) als Steckverbindung mit einem Sicherungselement (14) ausgebildet ist.

14. Implantatteil nach einem der Ansprüche 9 bis 10 oder 13, **dadurch gekennzeichnet**, Formschlussverbindung (7) zwischen Aufbaupfosten (3) und Krone (4) als Schnappverbindung ausgebildet ist.

15. Implantatteil nach Anspruch 14, **dadurch gekennzeichnet, dass** die Schnappverbindung gebildet wird aus an dem Aufbaupfosten (3) angebrachten Außenrastelementen (73a), die mit hierzu korrespondierenden, an der Krone (4) angeordneten Innenrastelementen (73b) zusammenwirken.

16. Implantatteil nach Anspruch 15, **dadurch gekennzeichnet, dass** der obere Bereich des Aufbaupfosten (3) als mehreckförmiger, insbesondere sechseckförmiger Pfosten (15) ausgebildet ist, wobei in dessen oberes Ende eine Bohrung (16) eingebracht ist und wobei die Außenrastelemente (73a) am oberen, der Krone (4) zugewandten Ende des mehreckförmigen Pfostens (15) angeordnet sind und die oberen Enden der sechs Kanten des mehreckförmigen Pfostens (15) mit Aussparungen (12) versehen sind.

17. Implantatteil nach einem der Ansprüche 14 bis 16, **dadurch gekennzeichnet, dass** die Verdrehsicherung (8) gebildet wird aus einem Bereich des Aufbaupfostens (3), der eine in Richtung der Längsachse (2) des Implantatteils (1) mehreckige, vorzugsweise sechseckige Form hat, der in einen hierzu entsprechend geformten Abschnitt der Krone (4) eingreift.

18. Implantatteil nach Anspruch 14, **dadurch gekennzeichnet, dass** die Schnappverbindung gebildet wird aus an dem Aufbaupfosten (3) angebrachten Innenrastelementen (74a), die mit hierzu korrespondierenden, an der Krone angeordneten Außenrastelementen (74b) zusammenwirken.

19. Implantatteil nach einem der Ansprüche 13 oder 14, **dadurch gekennzeichnet, dass** das Sicherungselement (14) ein im wesentlichen längsquaderförmiges Verbindungselement (75b) ist, welches beim zusammengebauten Implantatteil (1) durch eine rechteckförmige Ausnehmung (13) in der Krone (4) und eine rechteckförmige Ausnehmung (75c) im oberen Bereich des Aufbaupfostens (3) gesteckt ist.

20. Implantatteil nach Anspruch 19, **dadurch gekennzeichnet, dass** das Sicherungselement (14) ein zungenförmiges Schnappelement (14a) zur sicheren Befestigung an der Krone (4) aufweist.

## Claims

1. An implant part (1) for a dental implant with a abutment post (3) and a crown (4) movable within certain limits against the effect of a spring element (6) in the axial longitudinal direction (2) of the implant part (1), **characterized in that** the crown (4) is formed in a single part and arranged on the abutment post (3) in a lockable manner by a form-locking connection (7), and **in that** the spring element (6) takes effect between the abutment post (3) and the crown (4).

2. An implant part according to claim 1, **characterized in that** it has an essentially double-truncated cone shape, its axial longitudinal axis (2) being essentially coaxial with the longitudinal axis of the dental implant.

3. An implant part according to claim 1 or 2, **characterized in that** the surfaces of the abutment post (3) and the crown (4) forming the outer contour of the implant part (1) have a smooth transition to each other.

4. An implant part according to one of the preceding claims, **characterized in that** the abutment post (3) is connectable at its bottom end with a basis carrier to be implanted into the jaw bone and that, at its upper end, the connecting elements (7a) are arranged which co-operate with the connecting elements (7b) of the crown (4).

5. An implant part according to one of the preceding claims, **characterized in that** the spring element (6) is engaged between a first support surface (6a) of the abutment post (3) and a second support surface (6b) of the crown (4).

6. An implant part according to one of the preceding claims, **characterized in that** spacer elements are disposed between the spring element (6) and the first support surface (6a) of the abutment post (3) and/or between the spring element (6) and the second support surface (6b) of the crown (4).

7. An implant part according to one of the preceding claims, **characterized in that** the spring element (6) is disposed between the abutment post (3) and the crown (4) in a central inner cavity (4a) of the crown (4) extending coaxially with the longitudinal axis (2) of the implant part (1).

8. An implant part according to one of the preceding claims, **characterized in that** the form-locking connection (7) is releasable so that the crown (4) can be removed from the abutment post (3) without damage.

9. An implant part according to one of the preceding claims, **characterized in that** the spring element (6) encompasses the upper area of the abutment post (3).

10. An implant part according to one of the preceding claims, **characterized in that** it has an anti-rotation lock (8) acting between the abutment post (3) and the crown (4) which prevents rotation of the crown (4) fitted onto the abutment post (3).

11. An implant part according to one of the preceding claims, **characterized in that** the form-locking connection (7) between the abutment post (3) and the crown (4) comprises an outer thread (72a) on the abutment post (3) and a corresponding inner thread (72b) on the crown (4).

12. An implant part according to claim 8, **characterized in that** the form-locking connection (7) between the abutment post (3) and the crown (4) is formed as a bayonet lock.

13. An implant part according to claim 8, **characterized in that** the form-locking connection (7) between the abutment post (3) and the crown (4) is formed as an insertion connection with a securing element (14).

14. An implant part according to one of claims 9 to 10 or 13, **characterized in that** the form-locking connection (7) between the abutment post (3) and the crown (4) is formed as a snap-in connection.

15. An implant part according to claim 14, **characterized in that** the snap-in connection is formed of outer engagement elements (73a) provided on the abutment post (3), which elements co-operate with corresponding inner engagement elements arranged on the crown (4).

16. An implant part according to claim 15, **characterized in that** the upper part of the abutment post (3) is formed as a polygonally shaped, in particular hexagonally shaped post (15), a bore (16) being formed in the upper end thereof, and the outer engagement elements (73a) being arranged on the top end facing the crown (4) of the polygonally shaped post (15) and the upper ends of the six edges of the polygonally shaped post (15) being provided with cut-outs (72).

17. An implant part according to one of claims 14 to 16, **characterized in that** the anti-rotation lock (8) is formed of an area of the abutment post (3) having a form which is polygonal, preferably hexagonal in the direction of the longitudinal axis (2) of the implant part (1), which area engages a correspondingly formed section of the crown (4).

18. An implant part according to claim 14, **characterized in that** the snap-in connection is formed of an inner engagement element (74a) mounted to the abutment post (3), which elements co-operate with corresponding outer engagement elements (74b) arranged on the crown.

19. An implant part according to claim 13 or 14, **characterized in that** the securing element (14) is an essentially rectangular elongated connecting element (75b) which, in the assembled implant part (1) is inserted through a rectangular cavity (13) in the crown (4) and a rectangular cavity (75c) in the upper area of the abutment post (3).

20. An implant part according to claim 19, **characterized in that** the securing element (14) has a tongue-shaped snap-in element (14a) for securely fixing the crown (4).

## Revendications

1. Elément d'implant (1) pour un implant dentaire, avec un pilier (3) et une couronne (4) mobile dans des limites déterminées dans la direction longitudinale (2) axiale de l'élément d'implant (1) en s'opposant à l'action d'un élément de ressort (6), **caractérisé en ce que** la couronne (4) est réalisée d'une seule pièce et est disposée sur le pilier (3) de manière verrouillable au moyen d'une liaison solidaire avec correspondance de forme (7) et que l'élément de ressort (6) agit entre le pilier (3) et la couronne (4).

2. Elément d'implant selon la revendication 1, **caractérisé en ce qu'**il présente essentiellement une forme en double tronc de cône, son axe longitudinal (2) axial s'étendant essentiellement coaxialement à l'axe longitudinal de l'implant dentaire.

3. Elément d'implant selon la revendication 1 ou 2, **caractérisé en ce que** les surfaces du pilier (3) et de la couronne (4) formant le contour extérieur de l'élément d'implant (1) passent à fleur de l'une à l'autre.

4. Elément d'implant selon l'une quelconque des revendications précédentes, **caractérisé en ce que** le pilier (3) peut être relié à son extrémité inférieure à un support de base à insérer dans l'os de la mâchoire et que les éléments de liaison (7a) qui coopèrent avec les éléments de liaison (7b) de la couronne (4) sont disposés à son extrémité supérieure.

5. Elément d'implant selon l'une quelconque des revendications précédentes, **caractérisé en ce que** l'élément de ressort (6) est enserré entre une première surface d'appui (6a) du pilier (3) et une deuxième surface d'appui (6b) de la couronne (4).

6. Elément d'implant selon l'une quelconque des revendications précédentes, **caractérisé en ce que** des éléments d'écartement sont disposés entre l'élément de ressort (6) et la première surface d'appui (6a) du pilier (3) et/ou entre l'élément de ressort (6) et la deuxième surface d'appui (6b) de la couronne (4).

7. Elément d'implant selon l'une quelconque des revendications précédentes, **caractérisé en ce que** l'élément de ressort (6) entre pilier (3) et couronne (4) est disposé dans un évidement (4d) intérieur central de la couronne (4) s'étendant coaxialement à l'axe longitudinal (2) de l'élément d'implant (1).

8. Elément d'implant selon l'une quelconque des revendications précédentes, **caractérisé en ce que** la liaison solidaire avec correspondance de forme (7) est séparable pour permettre l'enlèvement de la couronne (4) sans endommager le pilier (3).

9. Elément d'implant selon l'une quelconque des revendications précédentes, **caractérisé en ce que** l'élément de ressort (6) entoure la zone supérieure du pilier (3).

10. Elément d'implant selon l'une quelconque des revendications précédentes, **caractérisé en ce qu'**il présente un dispositif de sécurité anti-rotation (8) agissant entre pilier (3) et couronne (4), qui empêche une rotation de la couronne (4) posée sur le pilier (3).

11. Elément d'implant selon l'une quelconque des revendications précédentes, **caractérisé en ce que** la liaison solidaire avec correspondance de forme (7) entre pilier (3) et couronne (4) comprend un filetage extérieur (72a) sur le pilier (3) et un filetage intérieur (72b) correspondant à celui-ci sur la couronne (4).

12. Elément d'implant selon la revendication 8, **caractérisé en ce que** la liaison solidaire avec correspondance de forme (7) entre pilier (3) et couronne (4) est réalisée sous la forme d'un emboîtement à baïonnette.

13. Elément d'implant selon la revendication 8, **caractérisé en ce que** la liaison solidaire avec correspondance de forme (7) entre pilier (3) et couronne (4) est réalisée sous la forme d'un raccord à emboîtement avec un élément de sécurité (14).

14. Elément d'implant selon l'une des revendications 9 à 10 ou 13, **caractérisé en ce que** la liaison solidaire avec correspondance de forme (7) entre pilier (3) et couronne (4) est réalisée sous la forme d'un assemblage à encliquetage.

15. Elément d'implant selon la revendication 14, **caractérisé en ce que** l'assemblage à encliquetage est formé d'éléments d'encliquetage extérieurs (73a) disposés sur le pilier (3) qui coopèrent avec des éléments d'encliquetage intérieurs (73b) correspondant à ceux-ci, disposés sur la couronne (4).

16. Elément d'implant selon la revendication 15, **caractérisé en ce que** la zone supérieure du pilier (3) est réalisée sous la forme de pilier (15) polygonal, en particulier hexagonal, un orifice (16) étant ménagé à l'extrémité supérieure dudit pilier et les éléments d'encliquetage extérieurs (73a) étant disposés à l'extrémité supérieure, tournée vers la couronne (4), du pilier (15) polygonal et les extrémités supérieures des six pans du pilier polygonal (15) étant munies d'encoches (12).

17. Elément d'implant selon l'une des revendications 14 à 16, **caractérisé en ce que** le dispositif anti-rotation (8) est formé d'une zone du pilier (3) qui a une forme polygonale, de préférence hexagonale, dans la direction de l'axe longitudinal (2) de l'élément d'implant (1), et qui s'engage dans un segment de la couronne (4) de forme correspondante.

18. Elément d'implant selon la revendication 14, **caractérisé en ce que** l'assemblage à encliquetage est formé d'éléments d'encliquetage intérieurs (74a) disposés sur le pilier (3), qui coopèrent avec des éléments d'encliquetage extérieurs (74b) disposés sur la couronne (4).

19. Elément d'implant selon l'une des revendications 13 ou 14, **caractérisé en ce que** l'élément de sécurité (14) est un élément de liaison (75b) essentiellement en forme de parallélépipède rectangle qui est enfoncé, lorsque l'élément d'implant (1) est assemblé, dans un évidement rectangulaire (13) dans la couronne (4) et un évidement rectangulaire (75c) dans la zone supérieure du pilier (3).

20. Elément d'implant selon la revendication 19, **caractérisé en ce que** l'élément de sécurité (14) présente un élément d'encliquetage (14a) en forme de languette pour la fixation sécurisée sur la couronne (4).
